# EUROPÄISCHE PATENTSCHRIFT

(11) **EP 0 936 228 B1**
(45) Veröffentlichungstag und Bekanntmachung des Hinweises auf die Patenterteilung: **23.07.2003**
(21) Anmeldenummer: 99103065.1
(22) Anmeldetag: 16.02.1999
(51) Int. Cl.: C08F 220/58, C08F 220/54, C08F 220/60, C08F 220/34, C08F 226/02, C08F 210/14, C08F 216/14, C08F 246/00, C04B 24/16

(54) **Wasserlösliche oder wasserquellbare sulfogruppenhaltige Copolymere, Verfahren zu deren Herstellung und ihre Verwendung**
Water soluble or water-swellable copolymers containing sulphonic groups, preparation process and their use
Copolymères soluble dans l'eau ou gonflables à l'eau, procédé de fabrication et leurs utilisation

(30) Priorität: 17.02.1998 DE 19806482
(43) Veröffentlichungstag der Anmeldung: 18.08.1999
(73) Patentinhaber: Degussa Construction Chemicals GmbH, 83308 Trostberg (DE)
(72) Erfinder: Albrecht, Gerhard, Dr., 83342 Tacherting (DE); Huber, Christian, 84518 Garching (DE); Schuhbeck, Manfred, 83308 Trostberg (DE); Weichmann, Josef, Dr., 84568 Pleiskirchen (DE); Kern, Alfred, Dr., 84558 Kirchweidach (DE)
(74) Vertreter: Weiss, Wolfgang, Dipl.-Chem. Dr.

(56) Entgegenhaltungen:
- EP-A- 0 448 717
- EP-A- 0 487 975
- EP-A- 0 757 998
- WO-A-90/12822
- US-A- 5 109 042
- US-A- 5 362 829
- PATENT ABSTRACTS OF JAPAN vol. 013, no. 084 (C-572), 27. Februar 1989 & JP 63 270332 A (KYORITSU YUKI CO LTD), 8. November 1988 & CHEMICAL ABSTRACTS, vol. 110, no. 22, 29. Mai 1989 Columbus, Ohio, US; abstract no. 198234,

## Beschreibung

Die vorliegende Erfindung betrifft wasserlösliche oder wasserquellbare sulfogruppenhaltige Copolymere, Verfahren zu deren Herstellung und die Verwendung dieser Copolymere in wäßrigen Baustoffsystemen auf der Basis hydraulischer Bindemittel wie Zement, Kalk, Gips, Anhydrit usw. sowie in wasserbasierenden Anstrich- und Beschichtungssystemen.

Üblicherweise werden wasserlösliche nichtionische Abkömmlinge von Polysacchariden, insbesondere Cellulose- und Stärkederivate, in wäßrigen Baustoffmischungen verwendet, um das unerwünschte Verdunsten des für die Hydratation und Verarbeitung erforderlichen Wassers bzw. dessen Abfließen in den Untergrund zu verzögern bzw. zu verhindern.

Die Möglichkeit, den Wasserhaushalt in Anstrichsystemen, Putzen, Klebemörteln, Spachtelmassen und Fugenfüllern, aber auch in Spritzbetonen für den Tunnelbau sowie in Unterwasserbetonen durch derartige Zusätze zu kontrollieren, hat weitreichende praktische Konsequenzen. Es werden hierdurch nämlich sowohl die Eigenschaften des Baustoffs im verarbeitungsfähigen Zustand als auch seine Eigenschaften im erhärteten bzw. getrockneten Zustand maßgeblich beeinflußt. Über die zentrale Funktion der Wasserretention beeinflussen derartige Zusätze daher auch Konsistenz (Plastizität), offene Zeit, Glättvermögen, Segregation, Klebrigkeit, Haftung (am Untergrund und am Werkzeug), Standfestigkeit und Abrutschwiderstand sowie Haftzug- und Druckfestigkeit bzw. Schwindung.

Die gemäß Ullmann's Enzyklopädie der Technischen Chemie (4. Auflage, Band 9, Seiten 208 - 210, Verlag Chemie Weinheim) gebräuchlichsten Wasserretentionsmittel sind synthetisch erzeugte nichtionische Cellulose- und Stärkederivate wie Methylcellulose (MC), Hydroxyethylcellulose (HEC) oder Hydroxyethylmethylcellulose (HEMC). Aber auch mikrobiell erzeugte Polysaccharide wie Welan gum und natürlich vorkommende extraktiv isolierte Polysaccharide (Hydrocolloide) wie Alginate, Xanthane, Carageenane, Galactomannane usw., werden entsprechend dem Stand der Technik zur Regelung des Wasserhaushaltes und der Rheologie von wäßrigen Baustoff- und Anstrichsystemen verwendet.

In der DE-OS 43 35 437 wird die Herstellung von Alkylcellulosen, z. B. Methylcellulose, aus Natriumcellulose und Methylchlorid beschrieben.

Die EP-A 292 242 offenbart die Synthese von Hydroxypropylmethylcellulose aus Baumwollinters, Methylchlorid und Propylenoxid, während für die Herstellung der in der DE-OS 33 16 124 beschriebenen HEMC-Derivate Ethylenoxid anstelle von Propylenoxid verwendet wird.

Nachteilig bei diesen Produkten ist die Verwendung von bekanntermaßen physiologisch bedenklichen Rohstoffen wie Ethylenoxid, Propylenoxid und Methylchlorid im Herstellprozeß.

Der Einsatz von nichtionischen Cellulosederivaten im Baustoff- und Anstrichsektor wird in einer Reihe von Druckschriften, so in der DE-OS 39 34 870 beschrieben. Derartige Produkte weisen niedrige thermische Flockungspunkte auf, was dazu führt, daß das Wasserretentionsvermögen bei Temperaturen oberhalb von 30 °C drastisch zurückgeht. Darüber hinaus ist das rheologische Eigenschaftsprofil dieser Produkte in Anstrichsystemen unzureichend, da Pigmente aufgrund fehlender adsorptiver Kräfte der Additive ungenügend dispergiert werden. Durch die Verwendung von Celluloseethern, welche ionische Gruppen enthalten, können diese Probleme gelöst werden.

So werden z. B. in der US-PS 5, 372, 642 Methylhydroxyalkylcarboxymethylcellulosen beschrieben, die in kalk- und zementhaltigen Mischungen keinen Abfall der Wasserretention ergeben, wenn die Anwendungstemperatur von 20 auf 40 °C erhöht wird. Eine generelle Unverträglichkeit mit mehrwertigen Kationen, wie Ca²⁺ und Al³⁺ läßt sich jedoch nicht grundsätzlich ausschließen, was zur Ausflockung und damit zur Unwirksamkeit dieser Produkte führen kann.

Sulfoalkylierte Cellulosederivate werden u. a. in der EP-A 0 554 749 beschrieben. Sie weisen im Vergleich zu carboxymethylierten Produkten eine ausgezeichnete Verträglichkeit mit mehrwertigen Kationen auf, zeigen jedoch bei Anwendung in Klebemörteln und Putzen abbindeverzögernde Eigenschaften. Ein weiterer Nachteil derartiger Produkte ist die unzureichend hohe Standfestigkeit in Klebemörteln, insbesondere bei Verwendung schwerer Fliesen.

Eine Erhöhung der Standfestigkeit erreicht man, wie in der US-PS 4,021,257 beschrieben, durch Modifizierung oder Formulierung von Celluloseethern mit Polyacrylamid. Nachteilig hierbei ist jedoch, daß Polyacrylamid unter alkalischen Bedingungen Ammoniak freisetzt, wodurch die Anwendung im Innenbereich problematisch erscheint.

Der vorliegenden Erfindung lag daher die Aufgabe zugrunde, wasserlösliche oder wasserquellbare Copolymere zu entwickeln, bei denen die genannten Nachteile des Standes der Technik mindestens teilweise beseitigt sind und die insbesondere bei vergleichsweise hohen Temperaturen wirken, einfach und umweltverträglich herstellbar sind und darüber hinaus Baustoff- und Anstrichsystemen ausgezeichnete anwendungstechnische Eigenschaften sowohl im verarbeitungsfähigen als auch im erhärteten bzw. getrockneten Zustand verleihen.

Diese Aufgabe wurde erfindungsgemäßdurch die Copolymere entsprechend Anspruch 1 gelöst. Überraschenderweise wurde gezeigt, daß sulfogruppenhaltige Copolymere auch bei relativ geringen Einsatzmengen hochwirksame und gut verträgliche Wasserretentionsmittel in Baustoff- und Anstrichsystemen darstellen und dabei verbesserte Eigenschaften gegenüber derzeit verwendeten Produkten aufweisen.

Die Copolymere entsprechend der vorliegenden Erfindung enthalten mindestens vier Baugruppen a), b), c) und d). Die erste Baugruppe stellt ein sulfogruppenhaltiges substituiertes Acryl- oder Methacrylderivat der Formel I dar: 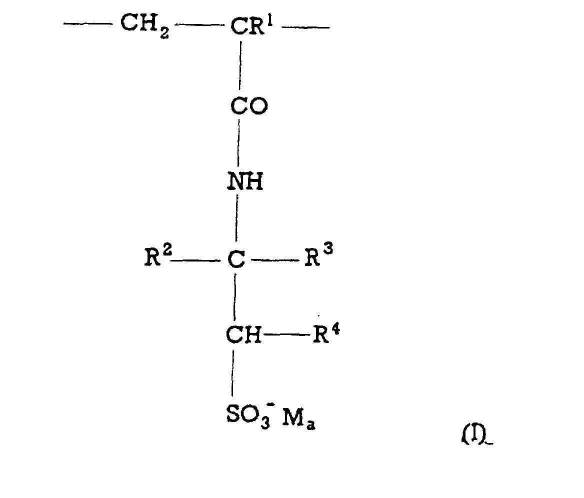 mit R¹ = Wasserstoff oder Methyl, R², R³, R⁴ = Wasserstoff, aliphatischer Kohlenwasserstoffrest mit 1 bis 6 C-Atomen, Arylrest mit 6-14 C-Atomen, der ggf. mit C₁-C₆-Alkylgruppen substituiert sein kann, z.B. ein ggf. mit Methylgruppen substituierter Phenylrest und M = Wasserstoff, ein- oder zweiwertiges Metallkation, Ammonium bzw. ein organischer Aminrest sowie a = ½ oder 1. Als ein- oder zweiwertiges Metallkation finden vorzugsweise Natrium-, Kalium-, Calcium- und/oder Magnesiumionen Verwendung. Als organische Aminreste werden vorzugsweise substituierte Ammoniumgruppen eingesetzt, die sich ableiten von primären, sekundären oder tertiären C₁- bis C₂₀-Alkylaminen, C₁- bis C₂₀-Alkanolaminen, C₅- bis C₈-Cycloalkylaminen und C₆- bis C₁₄-Arylaminen. Beispiele für entsprechende Amine sind Methylamin, Dimethylamin, Trimethylamin, Ethanolamin, Diethanolamin, Triethanolamin, Cyclohexylamin, Dicyclohexylamin, Phenylamin sowie Diphenylamin in der protonierten Ammoniumform.

Die Baugruppe a) leitet sich ab von Monomeren wie 2-Acrylamido-2-methylpropansulfonsäure, 2-Methacrylamido-2-methylpropansulfonsäure, 2-Acrylamidobutansulfonsäure, 3-Acrylamido-3-methylbutansulfonsäure, 2-Acrylamido-2,4,4-trimethylpentansulfonsäure. Besonders bevorzugt ist 2-Acrylamido-2-methylpropansulfonsäure.

Die zweite Baugruppe b) entspricht der Formel IIa) und/oder IIb): 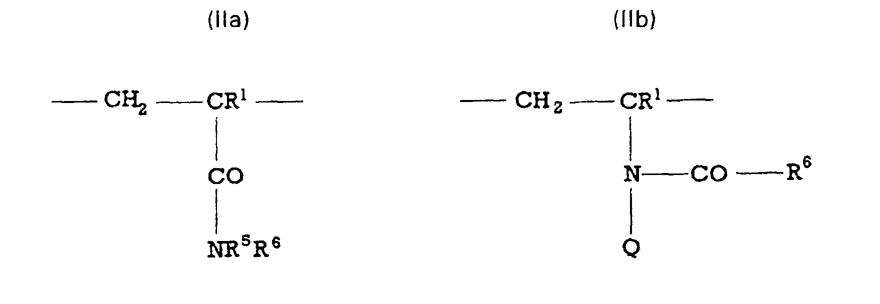 mit der oben beschriebenen Bedeutung für R¹. R⁵ und R⁶ stehen unabhängig voneinander für Wasserstoff, einen aliphatischen Kohlenwasserstoffrest mit 1 bis 20 C-Atomen, einen cycloaliphatischen Kohlenwasserstoffrest mit 5 bis 8 C-Atomen oder einen Arylrest mit 6 bis 14 C-Atomen. Diese Reste können ggf. einen oder mehreren Substituenten wie etwa Hydroxyl-, Carboxyl- und/oder Sulfonsäuregruppen enthalten.

Q bedeutet in Formel IIb) Wasserstoff oder -CHR⁵R⁷. Im Falle von Q ≠ H können R⁵ und R⁶ außerdem in der Struktur IIb) zusammen für eine -CH₂-(CH₂)_{y}-Methylengruppe mit y = 1 bis 4 stehen, die unter Einschluß des Restes der Formel IIb) 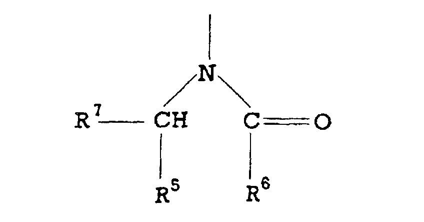 einen fünf- bis achtgliedrigen heterozyklischen Ring bilden kann.
R⁷ kann ein Wasserstoffatom, einen C₁- bis C₄-Alkylrest, eine Carbonsäure- oder eine Carboxylatgruppe -COOMₐ darstellen, wobei M und a die oben genannten Bedeutungen besitzen.

Als Monomere, die die Struktur IIa) bilden, kommen vorzugsweise folgende Verbindungen in Frage: Acrylamid, Methacrylamid, N-Methylacrylamid, N,N-Dimethylacrylamid, N-Ethylacrylamid, N-Cyclohexylacrylamid, N-Benzylacrylamid, N-Methylolacrylamid, N-tertiär Butylacrylamid usw. Beispiele für Monomere als Basis für die Struktur IIb) sind N-Methyl-N-vinylformamid, N-Methyl-N-vinylacetamid, N-Vinylpyrrolidon, N-Vinylcaprolactam, N-Vinylpyrrolidon-5-carbonsäure u. a.

Die dritte Baugruppe c) entspricht der Formel III: 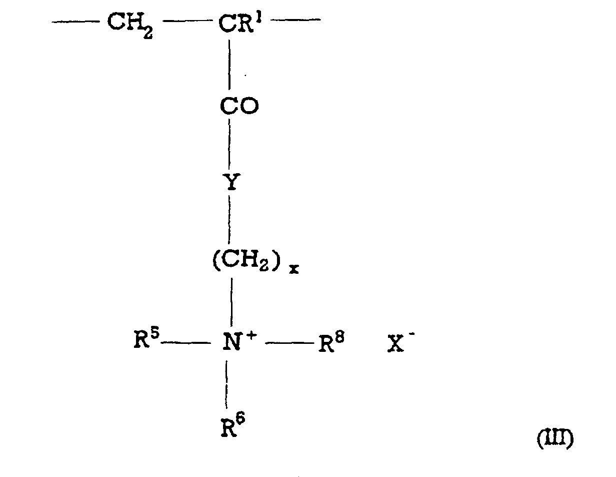 mit X = Anion, insbesondere Halogenid (vorzugsweise Cl, Br), C₁- bis C₄-Alkylsulfat oder C₁- bis C₄-Alkylsulfonat, x = 1 bis 6, Y = O, NH oder NR⁸ mit R⁸ = R⁵ bzw. R⁶ und der oben angegebenen Bedeutung für R⁵ und R⁶. Als Monomere, die die Struktureinheit c) bilden können, kommen insbesondere folgende Verbindungen in Frage: [2-(Acryloyloxy)-ethyl]-trimethyl-ammoniumchlorid, [2-(Acryloylamino)-ethyl]-trimethylammoniumchlorid, [2-(Acryloyloxy)-ethyl]-trimethylammoniummethosulfat, [2-(Methacryloyl- oxy)-ethyl]-trimethylammoniumchlorid bzw. -methosulfat und [3-(Methacryloylamino)-propyl]-trimethylammoniumchlorid.

Die vierte Baugruppe d) entspricht der Formel IV 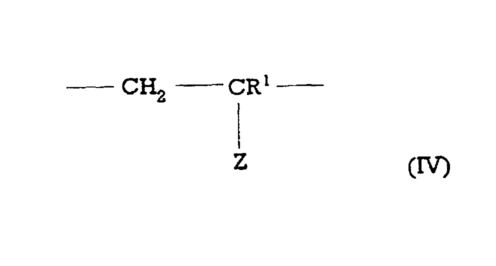 mit der oben angegebenen Bedeutung für R¹ sowie Z = -COO(CₘH₂ₘO)ₙR⁵ und -(CH₂)ₚO(CₘH₂ₘ)ₙR⁵ mit p = 0 bis 20, m = 2 bis 4 und n > 0 bis 200. Die Baugruppe d) leitet sich insbesondere ab von Monomeren wie Methylpolyethylenglykol-750-methacrylat, Polyethylenglykol-500-acrylat, Allylpolyethylenglykol-350, Methylpolyethenglykol-2000-monovinylether, Phenyltriethylenglykolacrylat, Hydroxyethylacrylat, Hydroxypropylacrylat, Hydroxypropylmethacrylat, Polyethylenglykol-500-vinyloxy-butylether, Methylpolyethylenglykol-block-propylenglykolallylether usw.

Bei den Monomeren, die die Baugruppen a) bis d) bilden, handelt es sich ausschließlich um einfach ungesättigte Verbindungen, die einen im wesentlichen linearen Aufbau der makromolekularen Struktur ergeben. Für bestimmte Anwendungsgebiete kann jedoch eine Verzweigung oder Vernetzung der Polymerketten von Vorteil sein. Um derartige Strukturen zu bilden, können die erfindungsgemäßen Copolymere von 0,0001 bis 50 Mol-% der Baugruppe e) enthalten, die sich bspw. von Monomeren mit mehr als einer Doppelbindung ableiten; nämlich von di- und triolefinischen Verbindungen mit einem bevorzugten Anteil von 0,001 bis 5 Mol-%. Beispiele für derartige Verbindungen sind Diacrylat- oder Dimethacrylatester von Ethylenglykol, Diethylenglykol, Polyethylenglykol, Propylenglykol, Polypropylenglykol oder Blockcopolymeren aus Ethylen- und Propylenglykol, Diallyl- bzw. Divinylether von Ethylenglykol oder Propylenglykol, 1,4-Butandiol, 1,5-Pentandiol oder 1,6-Hexandiol. Weiterhin verwendbar sind N,N'-Methylen-bis-acrylamid, N,N'-Methylen-bis-methacrylamid als diolefinische Verbindungen sowie z. B. Trimethylolpropantriacrylat und Triallylisocyanurat als triolefinische Monomere.

Außerdem kann sich die Baugruppe e) auch von monoolefinischen polymerisationsfähigen Verbindungen bspw. auf Acryl- oder Vinylbasis mit einem bevorzugten Anteil von 0,1 bis 30 Mol-% ableiten. Als Beispiele seien genannt: Acrylnitril, Styrol, Ethylen, Butadien, Propylen, Isobuten, Vinylacetat, Acrylsäure, Methacrylsäure, Methylacrylat, Methylmethacrylat, Ethylacrylat, Butylacrylat, Ethylhexylacrylat, Allylacetat, Maleinsäure, Maleinsäureanhydrid, Maleinsäurediethylester, Maleinsäuredibutylester, Fumarsäure, Itakonsäure, Dodecenylbernsteinsäureanhydrid, Vinylsulfonsäure, Styrolsulfonsäure usw.

Es ist als erfindungswesentlich anzusehen, daß die Copolymere 3 bis 96 Mol-% der Baugruppe a), 3 bis 96 Mol-% der Baugruppe b) und 0,05 bis 75 Mol-% der Baugruppe c), 0,01 bis 50 Mol-% der Baugruppe d) bezogen auf die Gesamtmolzahl der Monomereinheiten enthalten. Vorzugsweise verwendete Polymere enthalten 40 bis 80 Mol-% a), 15 bis 55 Mol-% b), 2 bis 30 Mol-% c) und 0,5 bis 10 Mol-% d).

Die Anzahl der Struktureinheiten in den erfindungsgemäßen Copolymeren ist nicht eingeschränkt und hängt sehr stark vom jeweiligen Anwendungsgebiet ab. Es hat sich allerdings als vorteilhaft erwiesen, die Anzahl der Struktureinheiten so einzustellen, daß die Copolymere ein zahlenmittleres Molekulargewicht von 50 000 bis 5 000 000 aufweisen.

Die Herstellung der erfindungsgemäßen Copolymere erfolgt in an sich bekannter Weise durch Verknüpfung der die Strukturen a) bis d) und gegebenenfalls e) bildenden Monomere durch radikalische, ionische oder komplex koordinative Substanz-, Lösungs-, Gel-, Emulsions-, Dispersions- oder Suspensionspolymerisation. Da es sich bei den erfindungsgemäßen Produkten um wasserlösliche oder wasserquellbare Copolymere handelt, ist die Polymerisation in wäßriger Phase, die Polymerisation in umgekehrter Emulsion bzw. die Polymerisation in inverser Suspension bevorzugt. In besonders bevorzugten Ausführungsformen erfolgt die Umsetzung als wäßrige Lösungs- bzw. Gelpolymerisation oder als inverse Suspensionspolymerisation in organischen Lösemitteln unter Zuhilfenahme von Radikalstartern. Wird das Verfahren in wäßriger Phase durchgeführt, so ist insbesondere bei der Herstellung von Copolymeren im oberen Molekulargewichtsbereich, wie sie bspw. in Klebemörteln und im Unterwasserbeton verwendet werden, die Gelpolymerisation bevorzugt. Aufgrund äußerst hoher Lösungsviskositäten derartiger Produkte und des damit erforderlichen hohen Verdünnungsgrades ist eine Lösungspolymerisation aus wirtschaftlichen Gründen weniger günstig.

Die Herstellung von erfindungsgemäßen Copolymeren, deren Molekulargewicht im unteren oder mittleren Bereich liegt (Anwendbarkeit in Putzen und Anstrichsystemen), kann demgegenüber durchaus in Form einer wäßrigen Lösungspolymerisation erfolgen.

Die Umsetzung der Monomere wird bei Temperaturen von -20 bis 250 °C vorgenommen. Vorzugsweise erfolgt die Polymerisation bei 20 bis 120 °C unter Zuhilfenahme üblicher Radikalstarter wie Wasserstoffperoxid, Natrium-, Kalium- oder Ammoniumperoxodisulfat, Dibenzoylperoxid, 2,2'-Azo-bis-(2-amidinopropan)-dihydrochlorid, Azo-bis-(isobutyronitril) tert.-Butylhydroperoxid oder auf physikalischem Wege durch Bestrahlung oder elektrochemisch. Es ist ebenso möglich, die oben genannten Initiatoren mit Reduktionsmitteln wie Dibutylaminhydrochlorid, Na-Hydroxymethansulfinatdihydrat, Alkalimetallsulfiten und -metabisulfiten, Thioharnstoff, Übergangsmetallsalzen, die in der reduzierten Form vorliegen wie Eisen-2-sulfatheptahydrat u.a., zu Redoxsystemen zu kombinieren. Auch die Verwendung sonstiger Hilfsmittel, wie Molekulargewichtsreglern, z. B. Thioglykolsäure, Mercaptoethanol und Natriumhypophosphit, ist möglich.

Wird das Verfahren als wäßrige Lösungspolymerisation durchgeführt, so erfolgt die Polymerisation vorzugsweise bei 20 bis 100 °C, wobei die Monomerkonzentration der wäßrigen Lösung bevorzugt auf 5 bis 20 Gew.-% eingestellt wird. Zur Durchführung der Polymerisation gemäß einer bevorzugten Ausführungsform wird das Sulfoalkylacrylamid in Form seiner handelsüblichen Säureform in Wasser gelöst, durch Zugabe eines Alkalimetallhydroxids neutralisiert, unter Rühren mit weiteren erfindungsgemäß zu verwendenden Monomeren sowie mit Puffern, Molekulargewichtsreglern u.a. Polymerisationshilfsmitteln vermischt. Nach Einstellung des Polymerisations-pH-Wertes, der vorzugsweise zwischen 4 und 9 liegt, erfolgt eine Spülung des Gemisches mit einem Schutzgas wie Helium oder Stickstoff und anschließend die Aufheizung auf die entsprechende Polymerisationstemperatur. Die Polymerisation wird durch Zugabe des Polymerisationsinitiators gestartet und bis zum vollständigen Umsatz der Monomere weitergeführt. Die als viskose wäßrige Lösungen anfallenden Copolymere können direkt oder aber in getrockneter Form ihrer erfindungsgemäßen Verwendung zugeführt werden.

Wird zur Herstellung der Copolymere das Verfahren der wäßrigen Gelpolymerisation angewendet, so kann die Monomerkonzentration im Bereich von 15 bis 80 Gew.-% liegen. Bevorzugter Temperaturbereich sind 20 bis 100 °C. Es wird bevorzugt so wie bei der wäßrigen Lösungspolymerisation verfahren, jedoch fällt das Copolymerisat aufgrund der verwendeten geringeren Wassermenge als Gel an, welches vorzugsweise als zerkleinertes und getrocknetes Pulver angewendet wird.

In einer weiteren bevorzugten Ausführungsform erfolgt die Copolymerisation als inverse Suspensionspolymerisation der wäßrigen Monomerphase in einem organischen Lösemittel. Hierbei wird bevorzugt so verfahren, daß man das in Wasser gelöste und ggf. neutralisierte Monomergemisch in Gegenwart eines organischen Lösemittels, in welchem die wäßrige Monomerphase nicht oder schwer löslich ist, polymerisiert. Vorzugsweise wird in Gegenwart von "Wasser in Öl"-Emulgatoren (W/O-Emulgatoren) und/oder Schutzkolloiden auf Basis nieder- oder hochmolekularer Verbindungen gearbeitet, die in Anteilen von 0,05 bis 20 Gew.-% bezogen auf die Monomere verwendet werden. Beispiele für derartige Stabilisatoren sind Hydroxypropylcellulose, Ethylcellulose, Methylcellulose, Celluloseacetatbutyratmischether, Copolymere aus Ethylen und Vinylacetat, Styrol und Butylacrylat, Polyoxyethylensorbitanmonooleat, -laurat, bzw. -stearat, Blockcopolymere aus Propylen- und Ethylenoxid u. a.

Als organische Lösemittel kommen u. a. in Frage lineare aliphatische Kohlenwasserstoffe wie n-Pentan, n-Hexan, n-Heptan, verzweigte aliphatische Kohlenwasserstoffe (Isoparaffine), cycloaliphatische Kohlenwasserstoffe wie Cyclohexan und Decalin sowie Aromaten wie Benzol, Toluol und Xylol. Darüber hinaus eignen sich Alkohole, Ketone, Carbonsäureester, Nitroverbindungen, halogenhaltige Kohlenwasserstoffe, Ether und viele andere Solventien. Bevorzugt sind solche organischen Lösemittel, die mit Wasser azeotrope Gemische bilden.

Die wasserlöslichen oder wasserquellbaren Copolymere fallen zunächst in gelöster Form als feinverteilte wäßrige Tröpfchen im organischen Suspensionsmedium an und werden vorzugsweise durch Entfernen des Wassers als feste kugelförmige Partikel im organischen Suspensionsmittel isoliert. Nach Abtrennung des Suspensionsmittels und Trocknung verbleibt ein granulatförmiger Feststoff, der direkt oder in vermahlener Form seiner erfindungsgemäßen Verwendung zugeführt wird.

Die erfindungsgemäßen Polymerverbindungen eignen sich hervorragend als Zusatzmittel für wäßrige Baustoffsysteme, die hydraulische Bindemittel wie Zement, Kalk, Gips, Anhydrit usw. enthalten. Darüber hinaus sind sie in wasserbasierenden Anstrich- und Beschichtungssystemen anwendbar.

Die bevorzugten Einsatzmengen der erfindungsgemäßen Copolymere liegen in Abhängigkeit von der Verwendungsart zwischen 0,05 und 5 Gew.-% bezogen auf das Trockengewicht des Baustoff-, Anstrich- bzw. Beschichtungssystems.

Die Copolymere besitzen ausgezeichnete wasserrückhaltende Eigenschaften auch bei relativ hohen Anwendungstemperaturen und verleihen pigmenthaltigen Anstrichstoffen, Putzen, Klebemörteln, Spachtelmassen, Fugenfüllern, Spritzbeton, Unterwasserbeton, Erdölbohrzementen u. a. hervorragende anwendungstechnische Eigenschaften sowohl im Verarbeitungszustand als auch im erhärteten bzw. getrockneten Zustand (Haftzugfestigkeit von Klebemörtel nach Naßlagerung).

Die folgenden Beispiele sollen die Erfindung näher erläutern.

### Beispiel 1 (Lösungspolymerisation)

In einem 1 l-Polymerisationsreaktor mit Rührer, Rückflußkühler, Thermometer und Inertgasanschluß wurden 550 g Wasser vorgelegt. Unter Rühren wurden 20,61 g (0,0994 Mol) 2-Acrylamido-2-methylpropansulfonsäure zugegeben und bis zum Erhalt einer klaren Lösung gerührt. Nach Zusatz von 0,50 g Citronensäurehydrat wurden unter Rühren und Kühlen 78,22 g 5 Gew.-% ige wäßrige Natronlauge zugesetzt und ein pH-Wert von 4,60 eingestellt. Anschließend wurden nacheinander 20,61 g (0,2079 Mol) N,N-Dimethylacrylamid, 3,05 g (0,011 Mol) [2-(Methacryloyloxy)-ethyl]-trimethylammoniumchlorid (75 Gew.-%ige Lösung in Wasser) sowie 1,40 g (0,0017 Mol) Methylpolyethylenglykol-750-methacrylat zugesetzt, wobei der pH-Wert auf 4,75 anstieg. Die Lösung wurde durch 30 minütige Spülung mit Stickstoff inertisiert und auf 40 °C erwärmt. Anschließend wurden nacheinander 4,4 mg Eisensulfatheptahydrat und 0,76 g 30 Gew.-%iges wäßriges Wasserstoffperoxid zugesetzt. Die Polymerisation wurde durch Zugabe einer Lösung aus 0,57 g Natriumhydroxymethansulfinatdihydrat in 44,19 g Wasser gestartet. Es wurde 2 Stunden bei 40 °C gerührt, um die Polymerisation zu vervollständigen. Die hochviskose Lösung, die einen Feststoffgehalt von 6,3 Gew.-% aufwies, wurde im Vakuum eingeengt.

Es wurden 45 g eines weißen, harten Granulats erhalten, welches mit Hilfe einer Schlagmühle in einen pulverigen Zustand überführt wurde.

### Beispiel 2 (Gelpolymerisation)

In einem zylindrischen doppelwandigen 1 I-Polymerisationskolben wurden bei 25 °C 70,07 g (0,3381 Mol) 2-Acrylamido-2-methylpropansulfonsäure sowie 1,00 g Citronensäuremonohydrat in 350 g Wasser vorgelegt. Anschließend wurden unter Kühlen und Rühren 67,81 g 20 Gew.-%ige wäßrige Natronlauge zugegeben und ein pH-Wert von 4,50 eingestellt. Die klare Monomerlösung wurde mit 12,37 g (0,1248 Mol) N,N-Dimethylacrylamid, 9,41 g (0,0266 Mol) [2-(Methacryloyloxy)-ethyl]-trimethylammoniummethosulfat (80 Gew.-% in Wasser) und 0,95 g (0,0017 Mol) Allylpolyethylenglykol-550 versetzt. Das Gemisch wurde 35 Minuten mit Stickstoff gespült und daraufhin wurden nacheinander 8,8 mg Eisensulfatheptahydrat, 1,52 g 30 Gew.-%iges wäßriges Wasserstoffperoxid und 1,90 g einer 10 Gew.-%igen wäßrigen Natriumhydroxymethansulfinatdihydrat-Lösung zugegeben. Der Ansatz wurde unter Stickstoffspülung auf eine Innentemperatur von 40 °C aufgeheizt. Sofort nach Erreichen dieser Temperatur setzte die Polymerisation, erkennbar an einer starken Exothermie und einem merklichen Viskositätsanstieg, ein. Nach Erreichen des Temperaturmaximums von 65 °C wurde weitere 4 Stunden bei 40 °C Reaktormanteltemperatur getempert und auf Raumtemperatur abgekühlt.

Das erhaltene wasserklare Gel wurde zerkleinert und bei 90 °C im Vakuum bis zur Gewichtskonstanz getrocknet. Nach der Vermahlung wurde ein weißes, sprödes Pulver in einer Ausbeute von 94,8 g erhalten.

### Beispiel 3 (Inverse Suspensionspolymerisation)

In einem 500 ml-Vierhalskolben mit Thermometer, Rührer, Rückflußkühler und Inertgasanschluß wurden 200 g Cyclohexan und 1,50 g Ethylcellulose (Ethoxylgehalt ca. 48,5 %, Substitutionsgrad ca. 2,50) vorgelegt. Nach 30 minütiger Inertisierung wurde der Reaktorinhalt auf die Rückflußtemperatur von 80 °C gebracht und über einen Zeitraum von 1 Stunde wurde eine wäßrige Lösung aus 38,80 g (0,1872 Mol) 2-Acrylamido-2-methylpropansulfonsäure, 6,30 g (0,0636 Mol) N,N-Dimethylacrylamid, 4,05 (0,0092 Mol) [3-(Methacryloylamino)-propyl]-trimethylammoniumchlorid (50 Gew.-% in Wasser), 1,99 g (0,004 Mol) Methylpolyethylenglykol-500-monovinylether, 35,95 g 20 Gew.-%iger wäßriger Natronlauge, 0,012 g 2,2'-Azo-bis-(2-amidinopropan)-dihydrochlorid und 5 g Wasser zugeführt. Nach Ende der Dosierung wurde noch weitere 2,5 Stunden bei 75 bis 80 °C kräftig gerührt und anschließend über einen Zeitraum von ca. 2 Stunden das Wasser azeotrop entfernt. Nach Abkühlung auf Raumtemperatur wurde der Feststoff in Form von spherisch geformten Partikeln abfiltriert, mit wenig Cyclohexan gewaschen und im Vakuum getrocknet.

Es verblieben 54,3 g eines feinen glasartigen Granulates, welches durch Mahlung in ein weißes, feinkörniges Pulver überführt wurde.

### Beispiel 4

Nach dem Verfahren einer wäßrigen Lösungspolymerisation wurde, analog Beispiel 1, ein Gemisch der folgenden Zusammensetzung polymerisiert:
5,51 g (0,0266 Mol) 2-Acrylamido-2-methylpropansulfonsäure, die mit 21,26 g 5 Gew.-%iger wäßriger Natronlauge neutralisiert wurde.
35,71 g (0,5024 Mol) Acrylamid
7,39 g (0,0220 Mol) [2-(Acryloyloxy)-ethyltrimethylammoniummetho-sulfat (80 Gew.-%ig)
3,97 g (0,0047 Mol) Methylpolyethylenglykol-750-methacrylat
11,2 mg Eisensulfatheptahydrat
2,03 g 30 Gew.-%iges wäßriges Wasserstoffperoxid
0,86 g Natriumhydroxymethansulfinatdihydrat
750 g Wasser.

Nach Entfernung des Wassers aus der hochviskosen Polymerlösung verblieben 49,8 g eines spröden, weißen Rückstandes, der durch Mahlung in ein Pulver überführt wurde.

### Beispiel 5

Es wurde verfahren wie im Beispiel 2 (Gelpolymerisation) beschrieben, jedoch unter Einsatz des folgenden Polymerisationsgemisches:
15,00 g (0,0724 Mol) 2-Acrylamido-2-methylpropansulfonsäure, die mit 13,50 g 20 Gew.-%iger wäßriger Natronlauge auf pH 4,5 neutralisiert wurde
150,00 g (1,7624 Mol) Methacrylamid
1,73 g (0,0049 Mol) [2-(Methacryloyloxy)-ethyl]-trimethylammoniummethosulfat (80 Gew.-% in Wasser)
0,49 g (0,0008 Mol) Methylpolyethylenglykol-500-maleinat
550 g Wasser.

Das Gemisch wurde inertisiert, auf 80 °C erwärmt und durch Zugabe von 0,0822 g Ammoniumperoxodisulfat wurde die Polymerisation gestartet. Es wurde 4 Stunden bei 80 °C getempert und anschließend auf Raumtemperatur abgekühlt.

Das erhaltene wasserklare Gel wurde zerkleinert, getrocknet und gemahlen (Ausbeute: 165,9 g)

### Beispiel 6

Beispiel 3 wurde wiederholt, jedoch wurde das dort verwendete N,N-Dimethylacrylamid durch 6,30 g (0,0636 Mol) N-Methyl-N-vinylacetamid ersetzt. Es wurden 52,9 g eines weißen, harten Pulvers erhalten.

### Beispiel 7

Anstelle von N,N-Dimethylacrylamid im Beispiel 3 wurden 6,30 g (0,0567 Mol) N-Vinylpyrrolidon eingesetzt. Die Ausbeute des erhaltenen weißen, spröden Endproduktes lag bei 53,3 g.

### Beispiel 8

Es wurde analog Beispiel 3 verfahren, jedoch wurde Toluol anstelle von Cyclohexan als organisches Suspensionsmittel benutzt. Als Initiator dienten 0,012 g Ammoniumperoxodisulfat. Die Polymerisation wurde bei 110 °C über einen Zeitraum von 5 Stunden durchgeführt. Nach dem vollständigen Entfernen des Wassers und der Abtrennung des Feststoffes vom Toluol wurde dieser mit wenig Toluol gewaschen, getrocknet und gemahlen. Es verblieben 56,0 g eines weißen Pulvers.

### Beispiel 9

Die im Beispiel 3 beschriebene Synthese wurde wiederholt, jedoch wurde das dort verwendete Schutzkolloid Ethylcellulose durch eine Mischung aus 1,6 g Polyoxyethylen-20-sorbitanmonooleat und 0,8 g Sorbitanmonostearat ersetzt. Es wurde ein weißes Endprodukt in einer Menge von 54,0 g erhalten.

### Beispiel 10

Analog der in Beispiel 3 angegebenen Verfahrensweise wurde als Suspensionsstabilisator eine Mischung aus 1,7 g Polyoxyethylen-20-sorbitanmonooleat, 0,1 g Ethylcellulose und 0,3 g eines Blockcopolymerisats aus Ethylenoxid (EO) und Propylenoxid (PO) mit 20 Mol-% EO und einem Molekulargewicht von ca. 12 000 g/Mol verwendet. Die Ausbeute betrug 55,7 g.

### Vergleichsbeispiel 1

Handelsübliche Methylhydroxypropylcellulose mit einer Lösungsviskosität von 790 mm²/s (gemessen als 1 %ige wäßrige Lösung bei 20°C nach Ubbelohde).

### Vergleichsbeispiel 2

Hydroxyethylsulfoethylcellulose gemäß EP-A-0 554 749 (mit einer Lösungsviskosität von 1010 mm²/s bei 20°C, gemessen nach Ubbelohde).

### Vergleichsbeispiel 3

Handelsübliche Methylhydroxyethylcellulose mit einer Lösungsviskosität von 1950 mm²/s (1 %ige Lösung, 20°C, gemessen nach Ubbelohde).

### Anwendungsbeispiele

Die anwendungstechnische Beurteilung der erfindungsgemäßen Copolymere erfolgte anhand von Testgemischen aus dem Bereich Maschinen- und Kombinationsputz sowie Fliesenklebemörtel.

Hierzu wurde praxisnah geprüft unter Einsatz gebrauchsfertig formulierter Trockenmischungen, denen die erfindungsgemäßen Additive bzw. die Vergleichsprodukte in fester Form zugemischt wurden. Im Anschluß an die Trockenvermischung wurde eine bestimmte Wassermenge zugegeben und mittels Handmixer intensiv verrührt (Dauer ca. 15 bis 45 Sekunden, je nach Anwendung). Anschließend wurde die Mischung zwischen 2 Minuten (Putz) und 15 Minuten (Klebemörtel) reifen gelassen und einer ersten visuellen Prüfung unterzogen. Danach erfolgte die normgerechte Bestimmung von Konsistenz (Ausbreitmaß gemäß DIN 18555, Teil 2), Luftporengehalt, Standfestigkeit (Abrutschen) eingelegter Fliesen (10 x 10 cm) nach 30 Sekunden, Wasserretention gemäß DIN 18555, Teil 7 und Erhärtungsverhalten (qualitativ).

Die Zusammensetzung des Maschinen- und Kombinationsputzes bzw. des Fliesenklebemörtels ist aus Tabelle 1 zu entnehmen.

Die erhaltenen Ergebnisse sind in den Tabellen 2 (Maschinenputz), 3 (Kombinationsputz) und 4 (Fliesenklebemörtel) dargestellt.

**Tabelle 1**

| Zusammensetzung der Mörtelsysteme (in Gew.-%) | | | |
|---|---|---|---|
| *Komponente* | *Maschinenputz* | *Kombinationsputz* | *Klebemörtel* |
| Portlandzement Abbindeverzögerer ⁸⁾ | - | 12,00 ¹⁾ | 36,00 ²⁾ |
| Kalkhydrat | 10,00 | 8,00 | - |
| Kalksteinsand (0,1 - 1 mm) | 50,68 | 77,62 | - |
| Stuckgips (bzw. Gipshalbhydrat) | 39,00 | - | - |
| Quarzsand (0,05 - 0,4 mm) | - | - | 56,90 |
| Weißpigment ³⁾ | - | - | 5,50 |
| Cellulosefasern ⁴⁾ | - | - | 0,50 |
| Dispersionspulver ⁵⁾ | - | 2,00 | - |
| Abbindebeschleuniger ⁶⁾ | - | - | 0,80 |
| Luftporenbildner ⁷⁾ | 0,02 | 0,03 | - |
| Wasserrückhaltemittel | 0,20 | 0,30 | 0,30 |
| Abbindeverzögerer ⁸⁾ | 0,10 | 0,05 | - |

| | | | |
|---|---|---|---|
| ¹⁾ CEM II 32,5 R | | | |
| ²⁾ CEM II 42,5 R | | | |
| ³⁾ Ulmer weiß "Juraperle MHS" | | | |
| ⁴⁾ Arbocel HHC 200 | | | |
| ⁵⁾ Mowilith DM 200 | | | |
| ⁶⁾ Calciumformiat | | | |
| ⁷⁾ Hostapon OSB | | | |
| ⁸⁾ Weinsäure | | | |

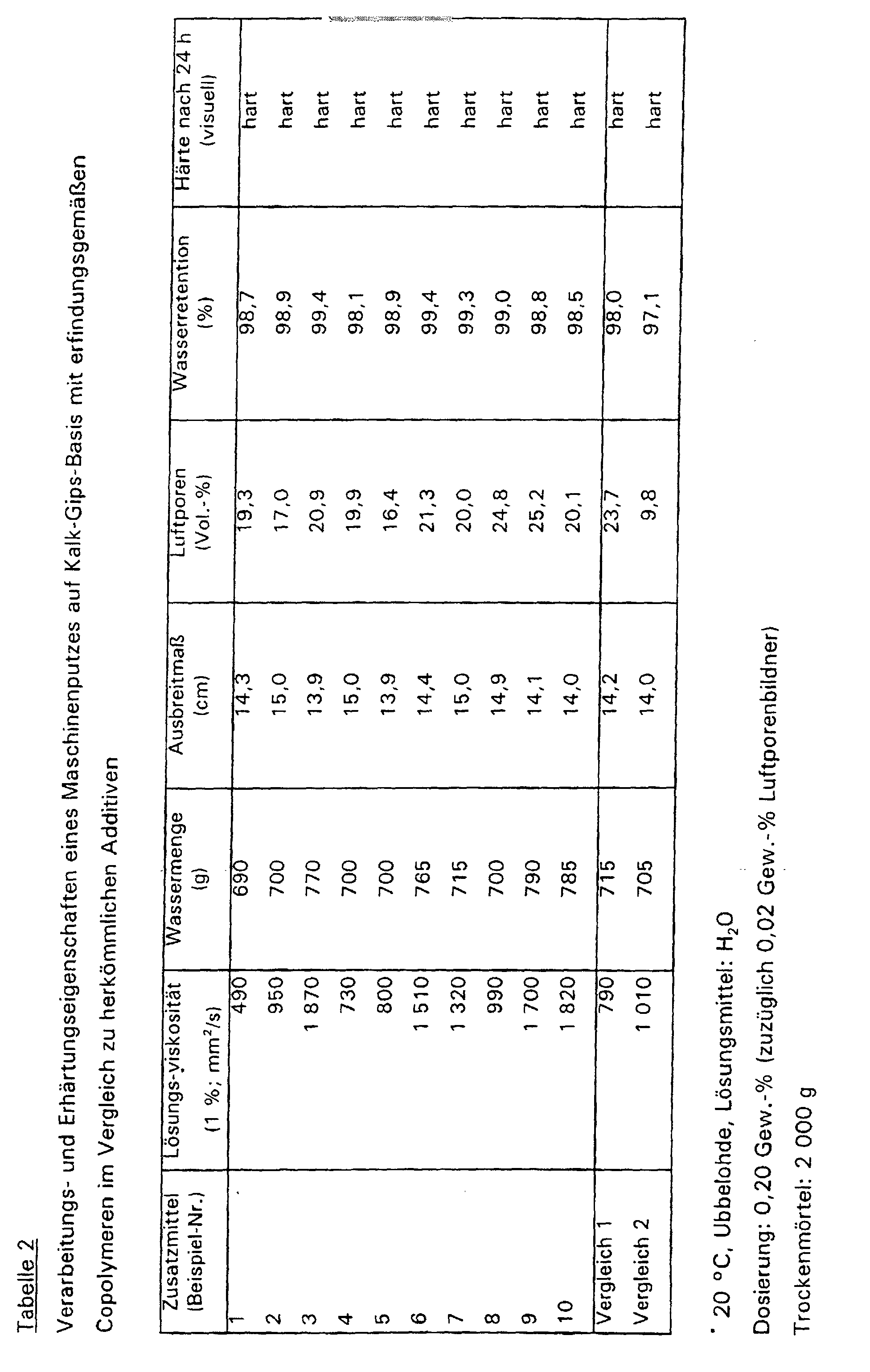

**Tabelle 3**

| Verarbeitungseigenschaften eines zementären Kombinationsputzes mit erfindungsgemäßen Copolymeren und Vergleichsprodukten | | | | |
|---|---|---|---|---|
| Zusatzmittel (Beispiel-Nr.) | Wasser-menge (g) | Ausbreitmaß (cm) | Luftporen (Vol.-%) | Wasser-retention (%) |
| 1 | 570 | 15,4 | 14,9 | 99,1 |
| 4 | 560 | 15,4 | 15,7 | 99,3 |
| 5 | 540 | 15,7 | 13,0 | 99,4 |
| 7 | 600 | 15,0 | 15,9 | 99,6 |
| 8 | 550 | 14,9 | 14,0 | 99,0 |
| Vergleich 1 | 540 | 15,6 | 13,4 | 98,4 |
| Vergleich 2 | 580 | 15,0 | 11,0 | 97,9 |
| Dosierung: 0,30 Gew.-% Trockenmörtel: 2 000 g | | | | |

**Tabelle 4**

| Verarbeitungseigenschaften eines Klebemörtels für Keramikfliesen, der mit erfindungsgemäßen und dem Stand der Technik entsprechenden Polymerisaten modifiziert wurde. | | | | | |
|---|---|---|---|---|---|
| Zusatzmittel (Beispiel-Nr.) | Wasser-menge (g) | Ausbreit-maß (cm) | Luftporen (Vol.-%) | Wasser-retention (%) | Abrutschen (nm) |
| 2 | 540 | 14,9 | 13,0 | 97,8 | 1 |
| 3 | 560 | 14,6 | 15,8 | 98,4 | 0 |
| 6 | 530 | 15,0 | 14,2 | 97,9 | 0 |
| 7 | 540 | 15,2 | 12,7 | 98,0 | 1 |
| 8 | 530 | 15,0 | 13,7 | 97,4 | 1 |
| 9 | 540 | 14,6 | 15,9 | 98,2 | 0 |
| 10 | 570 | 14,7 | 16,9 | 98,3 | 0 |
| Vergleich 2 | 530 | 15,6 | 10,9 | 97,7 | 2 |
| Vergleich 3 | 540 | 14,9 | 17,0 | 98,1 | 1 |
| Dosierung: 0,30 Gew.-% Klebemörtel: 2 000 g | | | | | |

Darüber hinaus wurden die Abschlag- und Haftzugeigenschaften von Klebemörteln, die mit erfindungsgemäßen Copolymeren modifiziert waren, im Vergleich zu Formulierungen, die dem Stand der Technik entsprechen, ermittelt. Die Ergebnisse sind in Tabelle 5 zusammengestellt.

**Tabelle 5**

| Erhärtungseigenschaften von Fliesenklebern in Gegenwart erfindungsgemäßer Copolymere im Vergleich zu herkömmlichen Zusatzmitteln | | | | |
|---|---|---|---|---|
| Zusatzmittel (Beispiel-Nr.) | Abschlagwiderstand (qualitativ) | Kratzfestigkeit (visuell) | Benetzung (visuell) | Haftzugfestigkeit 28 d (N/mm²) |
| 2 | hoch | gut - mittel | gut | 1,04 |
| 3 | sehr hoch | gut | sehr gut | 1,57 |
| 6 | sehr hoch | gut | sehr gut | 1,63 |
| 7 | sehr hoch | gut | sehr gut | 1,11 |
| 8 | hoch | gut | gut | 0,99 |
| 9 | sehr hoch | gut | sehr gut | 1,50 |
| 10 | sehr hoch | gut | sehr gut | 1,06 |
| Vergleich 2 | hoch | gut | gut | 0,89 |
| Vergleich 3 | mittel | gut - mittel | gut | 0,82 |
| Dosierung: 0,30 Gew.-% Klebemörtel: 2 000 g | | | | |

Schließlich wurde die Wasserretention der erfindungsgemäßen Produkte auch bei einer erhöhten Anwendungstemperatur von 40 °C in einem Maschinenputz bestimmt und mit den Resultaten der Prüfung herkömmlicher Additive auf Cellulosebasis verglichen. Hierzu wurden der Trockenmörtel, das Anmachwasser sowie die verwendeten Apparaturen durch sechsstündige Vorbehandlung auf 40 °C aufgeheizt. Tabelle 6 zeigt die Ergebnisse dieser Tests.

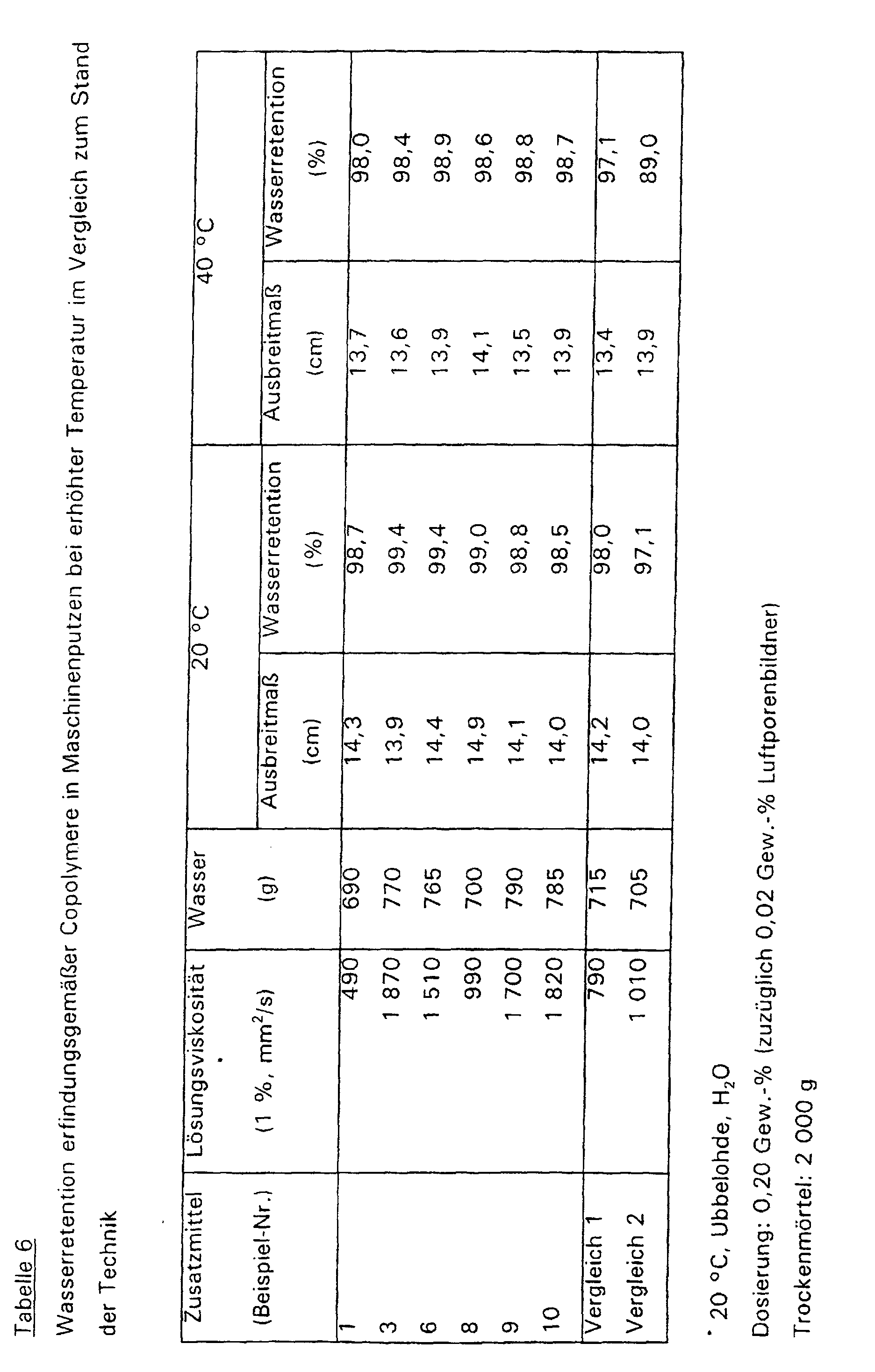

## Patentansprüche

1. Wasserlösliche oder wasserquellbare sulfogruppenhaltige Copolymere enthaltend
a) 3 bis 96 Mol-% Baugruppen der Formel I 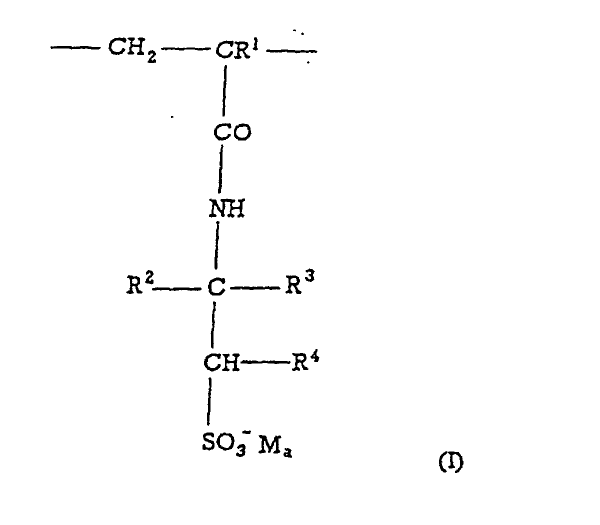 wobei R¹ = Wasserstoff oder Methyl
R², R³, R⁴ = jeweils unabhängig Wasserstoff, aliphatischer Kohlenwasserstoffrest mit 1 bis 6 C-Atomen, Arylrest mit 6-14 C-Atomen, der ggf. mit C₁-C₆-Alkylgruppen substituiert sein kann,
M = Wasserstoff, ein- oder zweiwertiges Metallkation, Ammonium und/oder ein organischer Aminrest
a = ½ oder 1
bedeuten,
b) 3 bis 96 Mol-% Baugruppen der Strukturformel IIa und/oder IIb 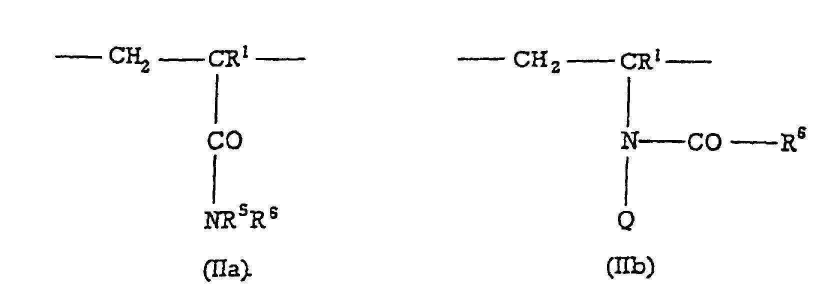 worin R⁵ und R⁶ = jeweils unabhängig Wasserstoff, ggf. substituierter aliphatischer Kohlenwasserstoffrest mit 1 bis 20 C-Atomen, cycloaliphatischer Kohlenwasserstoffrest mit 5 bis 8 C-Atomen, Arylrest mit 6 bis 14 C-Atomen und Q = Wasserstoff sowie -CHR⁵R⁷ bedeuten sowie im Falle von Q ≠ H R⁵ und R⁶ in IIb zusammen eine -CH₂-(CH₂)_{y}- Methylengruppe mit y = 1 bis 4 bilden,
R⁷ = Wasserstoff, aliphatischer Kohlenwasserstoffrest mit 1 bis 4 C-Atomen, -COOH oder -COO⁻Mₐ darstellt und
R¹, M und a die oben genannten Bedeutungen besitzen,
c) 0,05 bis 75 Mol-% Baugruppen der Formel III 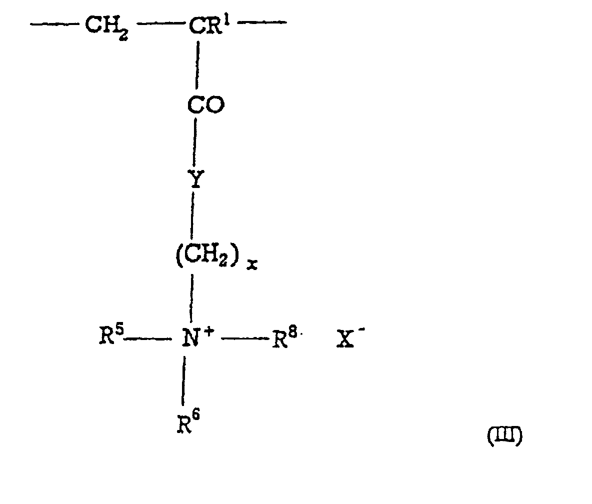 worin Y = O, NH oder NR⁵
R⁸ = R⁵ bzw.R⁶
X = Anion, insbesondere Halogenid ist, C₁- bis C₄-Alkylsulfat oder C₁- bis C₄-Alkylsulfonat
x = 1 bis 6
und R¹, R⁵ und R⁶ die oben genannten Bedeutungen besitzen,
d) 0,01 bis 50 Mol-% Baugruppen der Formel IV 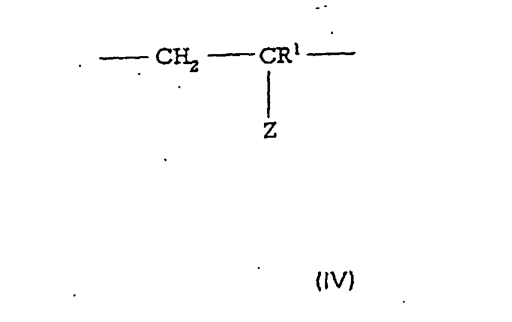 mit Z = -COO(CₘH₂ₘO)ₙ-R⁵, -(CH₂)ₚ-O(CₘH₂ₘO)ₙ-R⁵
m = 2 bis 4
n > 0 bis 200
p = 0 bis 20,
und R¹ die oben genannte Bedeutung besitzt.

2. Copolymere nach Anspruch 1,
**dadurch gekennzeichnet,**
**daß** M ein ein- oder zweiwertiges Metallkation ausgewählt aus Natrium, Kalium, Calcium oder Magnesium ist.

3. Copolymere nach einem der Ansprüche 1 und 2,
**dadurch gekennzeichnet,**
**daß** M ein organischer Aminrest ausgewählt aus substituierten Ammoniumgruppen ist, die sich ableiten von primären, sekundären oder tertiären C₁- bis C₂₀-Alkylaminen, C₁- bis C₂₀-Alkanolaminen, C₅- bis C₈-Cycloalkylaminen und C₆- bis C₁₄-Arylaminen.

4. Copolymere nach einem der Ansprüche 1 bis 3,
**dadurch gekennzeichnet,**
**daß** die Kohlenwasserstoff- oder Arylreste von R⁵ und R⁶ mit Hydroxyl-, Carboxyl- und/oder Sulfonsäuregruppen substituiert sind.

5. Copolymere nach einem der Ansprüche 1 bis 4,
**dadurch gekennzeichnet,**
**daß** X = Chlor oder Brom darstellt.

6. Copolymere nach einem der Ansprüche 1 bis 5,
**dadurch gekennzeichnet,**
**daß** sie noch zusätzlich 0,0001 bis 50 Mol-% der Baugruppen e) enthalten, die sich von mono-, di- und triolefinischen polymerisationsfähigen Verbindungen ableiten.

7. Copolymere nach Anspruch 6,
**dadurch gekennzeichnet,**
**daß** die diolefinischen Verbindungen ausgewählt sind aus Diacrylat- oder Dimethylacrylatestern.

8. Copolymere nach Anspruch 6,
**dadurch gekennzeichnet,**
**daß** als triolefinische Monomere Trimethylolpropantriacrylat und Triallylisocyanurat eingesetzt werden.

9. Copolymere nach Anspruch 6,
**dadurch gekennzeichnet,**
**daß** die monoolefinischen Verbindungen ausgewählt sind aus Acryl- oder Vinylderivaten.

10. Copolymere nach einem der Ansprüche 1 bis 9,
**dadurch gekennzeichnet,**
**daß** sie aus 40 bis 80 Mol-% der Baugruppe a), 15 bis 55 Mol-% der Baugruppe b), 2 bis 30 Mol-% der Baugruppe c) und 0,5 bis 10 Mol-% der Baugruppe d) bestehen.

11. Copolymere nach einem der Ansprüche 1 bis 10,
**dadurch gekennzeichnet,**
**daß** sie ein zahlenmittleres Molekulargewicht von 50 000 bis 5 000 000 aufweisen.

12. Verfahren zur Herstellung der Copolymere nach einem der Ansprüche 1 bis 11,
**dadurch gekennzeichnet,**
**daß** eine wäßrige Lösemittel- oder Gelpolymerisation oder eine inverse Suspensionspolymerisation in organischen Lösemitteln in Anwesenheit der benötigten Monomere bei Temperaturen von -20 bis 250 °C durchgeführt wird.

13. Verfahren nach Anspruch 12,
**dadurch gekennzeichnet,**
**daß** eine radikalische Polymerisation erfolgt.

14. Verfahren nach Anspruch 12 oder 13,
**dadurch gekennzeichnet,**
**daß** man eine wäßrige Lösemittelpolymerisation bei 20 bis 100 °C und einer Monomerkonzentration von 5 bis 20 Gew.-% durchführt.

15. Verfahren nach Anspruch 14,
**dadurch gekennzeichnet, daß** man den pH-Wert auf einen Wert zwischen 4 und 9 einstellt.

16. Verfahren nach Anspruch 12 oder 13,
**dadurch gekennzeichnet,**
**daß** man eine wäßrige Gelpolymerisation bei Temperaturen von 20 bis 100 °C und einer Monomerkonzentration von 15 bis 80 Gew.-% durchführt.

17. Verfahren nach Anspruch 12 oder 13,
**dadurch gekennzeichnet,**
**daß** man eine inverse Suspensionspolymerisation in einem organischen Lösemittel in Gegenwart von Wasser-in-Öl-(W/O)-Emulgatoren und/oder Schutzkolloiden durchführt.

18. Verfahren nach Anspruch 17,
**dadurch gekennzeichnet,**
**daß** die W/O-Emulgatoren und/oder Schutzkolloide in Anteilen von 0,05 bis 20 Gew.-% bezogen auf das Monomer vorliegen.

19. Verfahren nach einem der Ansprüche 17 oder 18,
**dadurch gekennzeichnet,**
**daß** man als organische Lösemittel aliphatische, cycloaliphatische oder aromatische Kohlenwasserstoffe verwendet.

20. Verwendung der Copolymere nach einem der Ansprüche 1 bis 11 als Zusatzmittel für wäßrige Baustoffsysteme, die hydraulische Bindemittel wie Zement, Kalk, Gips, Anhydrit usw. enthalten.

21. Verwendung der Copolymere nach einem der Ansprüche 1 bis 11 als Zusatzmittel für wasserbasierende Anstrich- und Beschichtungssysteme.

22. Verwendung nach einem der Ansprüche 20 und 21,
**dadurch gekennzeichnet,**
**daß** die Copolymere in einer Menge von 0,05 bis 5 Gew.-% bezogen auf das Trockengewicht des Baustoff-, Anstrich- bzw. Beschichtungssystems eingesetzt werden.

## Claims

1. Water-soluble or water-swellable copolymers with sulfonic groups, containing
a) 3 to 96 mol.% of structural components having the formula I 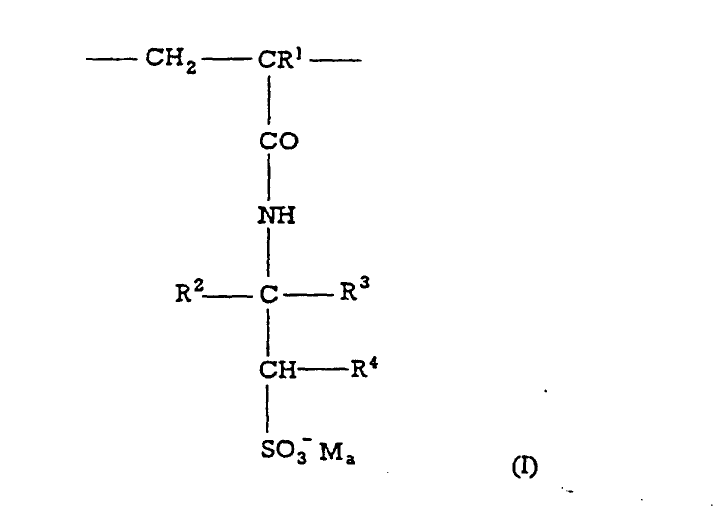 where R¹ = hydrogen or methyl,
R², R³, R⁴, independently of one another, are each hydrogen,
an aliphatic hydrocarbon radical with 1 to 6 C atoms, or an aryl radical with 6 to 14 C atoms, which may be substituted with C₁ - C₆ alkyl groups,
M = hydrogen, a mono- or bivalent metal cation, ammonium and/or an organic amino radical, and
a = 1/2 or 1,
b) 3 to 96 mol.% of structural components having the formula IIa or lIb 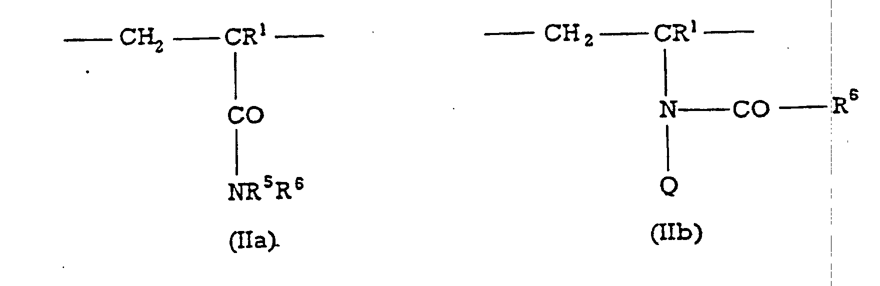 where R⁵ and R⁶, independently of one another, are each hydrogen, an aliphatic hydrocarbon radical which may be substituted and has 1 - 20 C atoms, an alicylic hydrocarbon radical which may be substituted and has 5 to 8 C atoms, or an aryl radical which may be substituted and has 6 to 14 C atoms, and
Q = hydrogen or -CHR⁵R⁷,
and where Q ≠ H,
R⁵ and R⁶ in IIb together form a -CH₂-(CH₂)_{y}-methylene group in which y = 1 to 4,
R⁷ = hydrogen, an aliphatic hydrocarbon radical with 1 to 4 C atoms, -COOH or -COOMₐ, and
R¹, M and a have the meanings already given,
c) 0.05 to 75 mol.% of structural components having the formula III 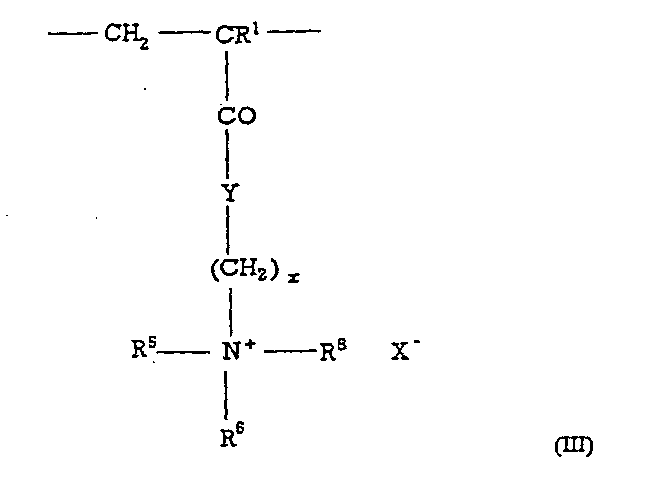 where Y = O, NH or NR⁵
R⁸ = R⁵ or R⁶,
X = anion, especially halide, C₁ to C₄- alkyl sulfate or
C₁ to C₄-alkyl sulfonate,
x = 1 to 6, and
R¹, R⁵ and R⁶ have the meanings already given.
d) 0.01 to 50 mol % of structural components having the formula IV 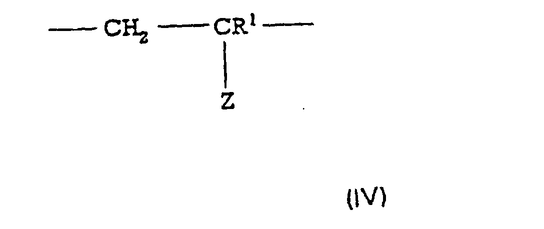 where Z = -COO(CₘH₂ₘO)ₙ-R⁵ or -(CH₂)ₚ-O(CₘH₂ₘO)ₙ-R⁵,
m = 2 to 4,
n = 0 to 200
p = 0 to 20, and
R1 has the meaning already given.

2. The copolymers of claim 1,
**wherein**
M is a mono- or bivalent metal cation selected from sodium, potassium, calcium and magnesium.

3. Copolymers according to one of claims 1 and 2,
**wherein**
M is an organic amino radical selected from substituted ammonium groups which are derived from primary, secondary or tertiary C₁ to C₂₀ alkylamines, C₁ to C₂₀ alkanolamines, C₅ to C₈ cycloalkylamines and C₆ to C₁₄ arylamines.

4. Copolymers according to one of claims 1 to 3,
**wherein**
the hydrocarbon or aryl radicals of R5 and R6 are substituted with hydroxyl, carboxyl and/or sulfonic acid groups.

5. Copolymers according to one of claims 1 to 4,
**wherein**
X = chlorine or bromine.

6. Copolymers according to one of claims 1 to 5,
**wherein**
the copolymers contain, in addition, 0.0001 to 50 mol % of structural components e), which are derived from polymerizable mono-, di- and tri-olefinic compounds.

7. The copolymers of claim 6,
**wherein**
the di-olefinic compounds are selected from diacrylate or dimethylacrylate esters.

8. The copolymers of claim 6,
**wherein**
trimethylolpropane triacrylate and triallyl isocyanurate are used as tri-olefinic monomers.

9. The copolymers of claim 6,
**wherein**
the mono-olefinic compounds are selected from acrylic or vinyl derivatives.

10. Copolymers according to one of claims 1 to 9,
**wherein**
the copolymers consist of 40 to 80 mol % of structural component a), 15 to 55 mol % of structural component b), 2 to 30 mol. % of structural component c) and 0.5 to 10 mol % of structural component d).

11. Copolymers according to one of claims 1 to 10,
**wherein**
the copolymers have a number average molecular weight of 50 000 to 5 000 000.

12. A method of preparing copolymers according to claims 1 to 11,
**wherein**
an aqueous solution or gel polymerization, or an inverse suspension polymerization in organic solvents is carried out in the presence of the required monomers at temperatures from -20 to 250°C.

13. The method of claim 12,
**wherein**
a free-radical polymerization is carried out.

14. The method of claim 12 or 13,
**wherein**
an aqueous solution polymerization is carried out at 20 to 100°C and a monomer concentration of 5 to 20 wt.%.

15. The method of claim 14,
**wherein**
the pH is adjusted to a value between 4 and 9.

16. The method of claim 12 or 13,
**wherein**
an aqueous gel polymerization is carried out at 20 to 100°C and a monomer concentration of 15 to 80 wt.%.

17. The method of claim 12 or 13,
**wherein**
an inverse suspension polymerization is carried out in an organic solvent in the presence of water-in-oil (W/O) emulsifiers and/or protective colloids.

18. The method of claim 17,
**wherein**
the W/O emulsifiers and/or protective colloids are present in proportions of 0.05 to 20 wt. %, expressed in terms of the monomer.

19. A method according to one of claims 17 or 18,
**wherein**
aliphatic, alicyclic or aromatic hydrocarbons serve as organic solvents.

20. Use of the copolymers according to one of claims 1 to 11 as additives for aqueous building material mixes that contain hydraulic binders such as cement, lime, gypsum, anhydrite etc.

21. Use of the copolymers according to one of claims 1 to 11 as additives for water-based painting and coating systems.

22. Use according to one of claims 20 and 21,
**wherein**
the proportion of copolymers used ranges from 0.05 to 5 wt.%, expressed in terms of the dry weight of the building material mix or of the painting or coating systems.

## Revendications

1. Copolymères solubles dans l'eau ou gonflables à l'eau à groupes sulfonés comprenant
a) de 3 à 96% en moles de groupes constitutifs de formule I 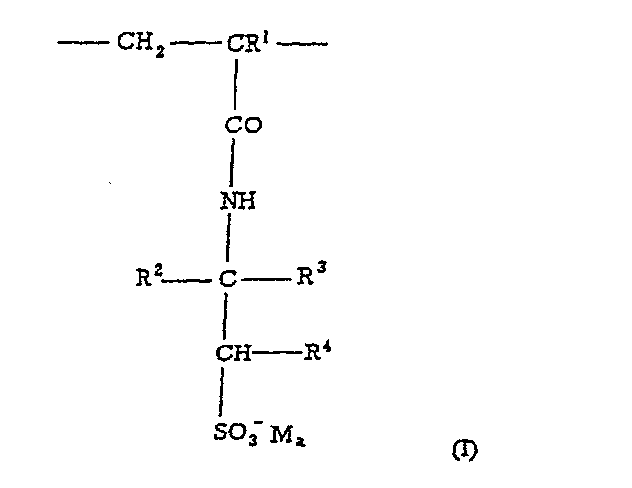 dans laquelle R¹ représente un l'hydrogène ou un groupe méthyle,
R², R³, R⁴ représentent, indépendamment les uns des autres, un atome d'hydrogène, un radical hydrocarbure aliphatique avec 1 à 6 atomes de carbone, un radical aryle avec 6 à 14 atomes de carbone pouvant éventuellement être substitué avec des groupes alkyles en C₁ à C₆,
M représente un atome d'hydrogène, un cation métallique mono ou bivalent, un ammonium et/ou un radical amine organique
a = ½ ou 1.
b) de 3 à 96% en moles de groupes constitutifs de formule structurelle IIa et/ou IIb 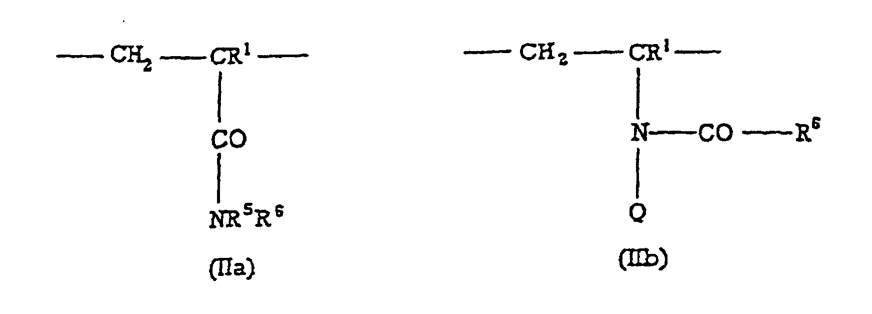 dans laquelle R⁵ et R⁶ représentent, indépendamment les uns des autres, un atome d'hydrogène, un radical hydrocarbure aliphatique avec 1 à 20 atomes de carbone, éventuellement substitué, un radical hydrocarbure cycloaliphatique avec 5 à 8 atomes de carbone, un radical aryle avec 6 à 14 atomes de carbone, et Q représente un atome d'hydrogène ainsi que -CHR⁵R⁷ et, dans les cas où Q ≠ H, R⁵ et R⁶ forment ensemble dans IIb un groupe méthylène -CH₂-(CH₂)_{y}- avec y = 1 à 4,
R⁷ représente un atome d'hydrogène, un radical hydrocarbure aliphatique avec 1 à 4 atomes de carbone,-COOH ou -COOMₐ, et
R¹, M et a ont les significations décrites plus haut,
c) de 0,05 à 75% en moles de groupes constitutifs de formule III 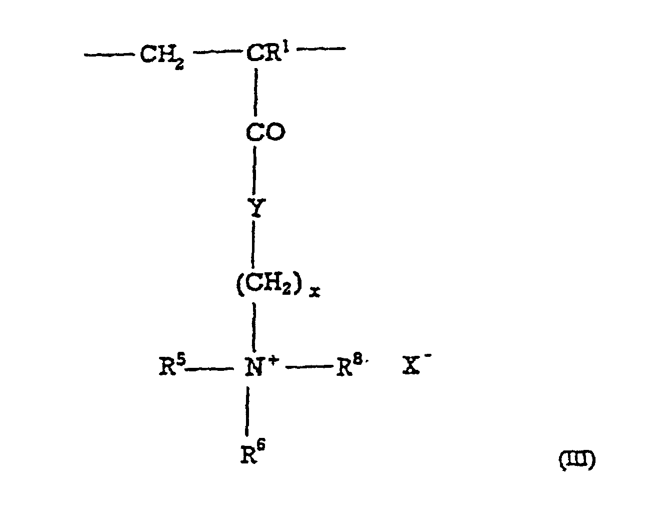 dans laquelle Y = O, NH ou NR⁵
R⁸ = R⁵ ou R⁶
X est un anion, en particulier un halogénure, un sulfate d'alkyle en C₁ à C₄ ou un sulfonate d'alkyle en C₁ à C₄
x = 1 à 6
et R¹, R⁵ et R⁶ ont les significations données plus haut,
d) de 0,01 à 50% en moles de groupes constitutifs de formule IV 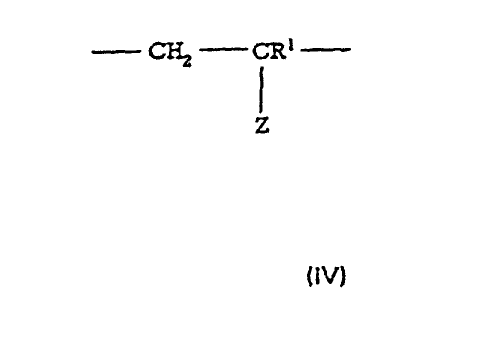 avec Z = -COO(CₘH₂ₘO)ₙ-R⁵, -(CH₂)ₚ-O(CₘH₂ₘO)ₙ-R⁵
m = 2 à 4
n > 0 à 200
p = 0 à 20
et R¹ a la signification donnée plus haut.

2. Copolymères selon la revendication 1,
**caractérisés en ce que**
M est un cation métallique mono ou bivalent choisi parmi le sodium, le potassium, le calcium ou le magnésium.

3. Copolymères selon l'une quelconque des revendications 1 et 2,
**caractérisés en ce que**
M est un radical amine organique choisi dans des groupes ammonium substitués dérivés d'alkylamines primaires, secondaires ou tertiaires en C₁ à C₂₀, d'alcanolamines en C₁ à C₂₀, de cycloalkylamines en C₅ à C₈ et d'arylamines en C₆ à C₁₄.

4. Copolymères selon l'une quelconque des revendications 1 à 3,
**caractérisés en ce que**
les radicaux hydrocarbure ou aryle de R⁵ et R⁶ sont substitués avec des groupes hydroxyle, carboxyle et/ou acide sulfonique.

5. Copolymères selon l'une quelconque des revendications 1 à 4,
**caractérisés en ce que**
X représente un atome de chlore ou de brome.

6. Copolymères selon l'une quelconque des revendications 1 à 5,
**caractérisés en ce qu'**
ils contiennent en outre de 0,0001 à 50% en moles de groupes constitutifs e) qui sont des dérivés de composés polymérisables mono, di et trioléfiniques.

7. Copolymères selon la revendication 6,
**caractérisés en ce que**
les composés dioléfiniques sont choisis parmi des esters diacrylates ou diméthylacrylates.

8. Copolymères selon la revendication 6,
**caractérisés en ce que**
le triacrylate de triméthylolpropane et l'isocyanurate de triallyle sont utilisés comme monomères trioléfiniques.

9. Copolymères selon la revendication 6,
**caractérisés en ce que**
les composés mono-oléfiniques sont choisis parmi des dérivés acryliques ou vinyliques.

10. Copolymères selon l'une quelconque des revendications 1 à 9,
**caractérisés en ce qu'**
ils sont constitués de 40 à 80% en moles de groupe constitutif a), de 15 à 55% en moles de groupe constitutif b), de 2 à 30% en moles de groupe constitutif c) et de 0,5 à 10% en moles de groupe constitutif d).

11. Copolymères selon l'une quelconque des revendications 1 à 10,
**caractérisés en ce qu'**
ils présentent une masse moléculaire moyenne en nombre comprise de 50 000 à 5 000 000.

12. Procédé de fabrication des copolymères selon l'une quelconque des revendications 1 à 11,
**caractérisé en ce qu'**
une polymérisation dans un solvant ou un gel aqueux ou une polymérisation en suspension inverse dans des solvants organiques en présence des monomères nécessaires est effectuée à des températures comprises entre -20 et 250°C.

13. Procédé selon la revendication 12,
**caractérisé en ce que**
une polymérisation radicalaire a lieu.

14. Procédé selon la revendication 12 ou 13,
**caractérisé en ce qu'**
on réalise une polymérisation en solvant aqueux de 20 à 100°C et à une concentration en monomère comprise de 5 à 20% en poids.

15. Procédé selon la revendication 14,
**caractérisé en ce qu'**
on ajuste le pH à une valeur comprise entre 4 et 9.

16. Procédé selon la revendication 12 ou 13,
**caractérisé en ce qu'**
on réalise une polymérisation dans un gel aqueux à des températures allant de 20 à 100°C et à une concentration en monomère comprise de 15 à 80% en poids.

17. Procédé selon la revendication 12 ou 13,
**caractérisé en ce qu'**
on réalise une polymérisation en suspension inverse dans un solvant organique en présence d'émulsifiants eau dans huile (e/h) et/ou de colloïdes de protection.

18. Procédé selon la revendication 17,
**caractérisé en ce que**
les émulsifiants e/h et/ou les colloïdes de protection sont présents dans des proportions allant de 0,05 à 20% en poids par rapport au monomère.

19. Procédé selon l'une quelconque des revendications 17 ou 18,
**caractérisé en ce que**
l'on utilise des hydrocarbures aliphatiques, cycloaliphatiques ou aromatiques comme solvant organique.

20. Utilisation des copolymères selon l'une quelconque des revendications 1 à 11 comme adjuvant pour les systèmes aqueux de matériaux de construction qui contiennent des liants hydrauliques tels que le ciment, la chaux, le plâtre, le plâtre anhydre, etc.

21. Utilisation des copolymères selon l'une quelconque des revendications 1 à 11 comme adjuvant pour les systèmes d'enduit et de revêtement à base d'eau.

22. Utilisation des copolymères selon l'une quelconque des revendications 20 à 21,
**caractérisée en ce que**
les copolymères sont utilisés dans une quantité comprise entre 0,05 et 5% en poids par rapport à la masse à sec du système de matériau de construction, d'enduit ou de revêtement.
